# EUROPÄISCHE PATENTANMELDUNG

(11) **EP 0 606 607 A1**
(43) Veröffentlichungstag der Anmeldung: **20.07.1994**
(21) Anmeldenummer: 93120323.6
(22) Anmeldetag: 16.12.1993
(51) Int. Cl.: H01G 4/30, H01L 21/3205

(54) **Verfahren zur Herstellung eines Vielschichtkondensators**

(30) Priorität: 14.01.1993 DE 4300808
(71) Anmelder: SIEMENS AKTIENGESELLSCHAFT, D-80333 München (DE)
(72) Erfinder: Dr. Willer, Josef, D-85521 Riemerling (DE); Dr. Wendt, Hermann, D-85630 Grasbrunn (DE); Dr. Reisinger, Hans, D-82031 Grünwald (DE)

(57) **Zusammenfassung**

Zur Herstellung eines Vielschichtkondensators wird auf ein Substrat (1) ein Schichtaufbau (2, 3, 4) aufgebracht, der alternierend leitfähige Schichten (2, 4) und dielektrische Schichten (3) umfaßt, und in dem aufeinanderfolgende leitfähige Schichten (2, 4) jeweils aus einem von zwei unterschiedlichen Materialien gebildet werden, die gegenseitig zueinander selektiv ätzbar sind. In dem Schichtaufbau (2, 3, 4) werden zwei Öffnungen (6, 8) erzeugt, wobei in der ersten Öffnung (6) durch selektives Ätzen des einen Materials und in der zweiten Öffnung (8) durch selektives Ätzen des anderen Materials Unterätzungen (21, 41) gebildet werden, so daß jeweils nur die leitfähigen Schichten (2, 4) aus dem nichtgeätzten Material an in die Öffnungen (6, 8) eingebrachte Kontakte (91, 92) angrenzen.

## Beschreibung

Vielschichtkondensatoren werden als passive Einzelbauelemente oder in integrierten Schaltungen verwendet.

Vielschichtkondensatoren werden unter anderem als Folienkondensatoren und als Keramikkondensatoren hergestellt. Bei den Folienkondensatoren werden Folien mit Metallisierungen bedruckt und anschließend unter Druck aufgewickelt. Aus der dabei entstehenden Spule werden Ausschnitte herausgeschnitten, die den einzelnen Folienkondensator bilden. Die Metallisierung wird so aufgedruckt, daß an den Rändern des Folienkondensators nur jede zweite Metallisierungsschicht angrenzt. Die dazwischenliegende Metallisierung ist vom Rand zurückversetzt. Auf diese Weise werden durch auf den Rändern aufgebrachte Kontakte jeweils nur jede zweite Metallisierungsschicht kontaktiert. Die Folie bildet das Dielektrikum. Aus herstellungstechnischen Gründen kann die Folie nicht beliebig dünn gewählt werden.

Zur Herstellung von Keramikkondensatoren werden Keramikfolien unter Verwendung der Siebdrucktechnik mit Metallfilmen beschichtet. Die beschichteten Keramikfolien werden gestapelt und anschließend gesintert. Die Metallfilme werden so angeordnet, daß jeweils jeder zweite Metallfilm an die Kante der Keramikfolie heranreicht, während der dazwischenliegende Metallfilm von der Kante zurückversetzt ist. Auf den Kanten werden Kontakte aufgebracht, die jeweils jeden zweiten Metallfilm kontaktieren. Die zur Herstellung von Keramikkondensatoren verwendeten Keramikfolien werden in einer Dicke von typisch 20 µm hergestellt. Ein Keramikkondensator umfaßt üblicherweise etwa 10 Lagen.

Der Erfindung liegt das Problem zugrunde, ein weiteres Verfahren zur Herstellung eines Vielschichtkondensators anzugeben, mit dem dünnere Schichten und damit Kondensatoren mit größerer Kapazität bei gleicher Baugröße herstellbar sind.

Dieses Problem wird erfindungsgemäß gelöst durch ein Verfahren nach Anspruch 1.

Auf ein Substrat, das ein Halbleiter, ein Metall oder ein Isolator sein kann, wird ein Schichtaufbau aufgebracht. Der Schichtaufbau umfaßt alternierend leitfähige Schichten und dielektrische Schichten. Aufeinanderfolgende leitfähige Schichten werden dabei jeweils aus einem ersten Material und einem davon verschiedenen zweiten Material gebildet, die gegenseitig zueinander selektiv ätzbar sind. In den Schichtaufbau wird eine erste Öffnung geätzt. Das dabei verwendete Ätzverfahren ätzt alle Schichten bis auf das Substrat mit annähernd gleicher Rate. In einem zweiten Ätzschritt, der das zweite Material selektiv zum ersten Material entfernt, werden die leitfähigen Schichten aus dem zweiten Material geätzt, so daß im Schichtaufbau der ersten Öffnung benachbart Unterätzungen entstehen. Unter Verwendung einer zweiten Maske als Ätzmaske wird in einem dritten Ätzschritt eine zweite Öffnung in den Schichtaufbau geätzt. Das dabei verwendete Ätzverfahren ätzt wiederum alle Schichten bis auf das Substrat mit annähernd gleicher Rate. In einem vierten Ätzschritt, der das erste Material selektiv zum zweiten Material entfernt, werden die leitfähigen Schichten aus dem ersten Material geätzt, so daß im Schichtaufbau der zweiten Öffnung benachbarte Unterätzungen entstehen. Durch Bildung eines ersten Kontaktes in der ersten Öffnung, der wegen der Unterätzungen nur mit den leitfähigen Schichten aus dem ersten Material in Verbindung steht, und eines zweiten Kontaktes in der zweiten Öffnung, der wegen der Unterätzungen nur mit den leitfähigen Schichten aus dem zweiten Material in Verbindung steht, wird der Vielschichtkondensator fertiggestellt.

Zur Schichterzeugung können in dem erfindungsgemäßen Verfahren aus der Halbleitertechnologie bekannte Verfahren eingesetzt werden. Damit können Schichten auch noch mit geringen Dicken von z. B. 100 nm gut kontrolliert hergestellt werden.

Werden in dem zweiten Ätzschritt und in dem vierten Ätzschritt zur Bildung der Unterätzungen Ätzverfahren eingesetzt, die zusätzlich selektiv zu den dielektrischen Schichten das entsprechende Material angreifen, werden die Unterätzungen zwischen je zwei dielektrischen Schichten gebildet. Die leitfähigen Schichten, die jeweils in der Öffnung kontaktiert werden, bleiben oben und unten von den dielektrischen Schichten bedeckt. Auf diese Weise wird die Überschlagsfestigkeit in dem fertigen Vielschichtkondensator erhöht.

Es liegt im Rahmen der Erfindung, die leitfähigen Schichten aus dotiertem Polysilizium oder aus verschiedenen Metallen zu bilden. Insbesondere liegt es im Rahmen der Erfindung, die leitfähigen Schichten aus dem ersten Material aus Wolfram und die leitfähigen Schichten aus dem zweiten Material aus Wolframsilizid zu bilden. Es ist besonders vorteilhaft, als Wolframsilizid WSi₂ oder WSi_{0,4} zu wählen, da diese Silizide besonders ausgeprägte Ätzeigenschaften aufweisen.

Als dielektrische Schichten sind alle bekannten Dielektrika wie SiO₂, Si₃N₄, Ta₂O₅, ... geeignet.

Werden die leitfähigen Schichten aus Wolfram und Wolframsilizid gebildet, so liegt es im Rahmen der Erfindung, die dielektrischen Schichten aus Si₃N₄ zu bilden. Diese Schichtenfolge kann durch Co-Sputtern in ein und derselben Sputteranlage, die mindestens über Target aus Silizium, Wolfram und Wolframsilizid verfügt, hergestellt werden.

Werden die leitfähigen Schichten aus Tantal und TaN gebildet und die dielektrischen Schichten aus Ta₂O₅, so kann der Schichtaufbau durch Abscheiden von einem einzigen Target in einer Sputteranlage erfolgen. Da die Schichten in einem einzigen Schritt abgeschieden werden, ist eine kostengünstige Prozeßführung möglich.

Die erste Maske und die zweite Maske wird z. B. aus Fotolack unter Einsatz optischer Lithographie oder aus einer Siebdruckpaste durch Siebdruck hergestellt.

Für die Ätzung sind insbesondere Trockenätzverfahren unter Verwendung eines fluoridhaltigen Gases geeignet. Als Ätzgas kann sowohl SF₆ als auch CF₄ verwendet werden. Zur Einstellung der Selektivität im zweiten Ätzschritt und im vierten Ätzschritt wird dem Ätzgas jeweils mindestens eines der Gase O₂, Ar, N₂, H₂ oder He beigemengt. Es ist bekannt, daß das Zufügen dieser Gase zu einer Selektivität der Ätzung führt.

Weitere Ausgestaltungen der Erfindung gehen aus den übrigen Ansprüchen hervor.

Im folgenden wird die Erfindung anhand der Figuren und eines Ausführungsbeispiels näher erläutert.
- Fig. 1: zeigt einen Schichtaufbau auf einem Substrat.
- Fig. 2: zeigt den Schichtaufbau, in dem eine erste Öffnung mit Unterätzungen gebildet wurde.
- Fig. 3: zeigt den Schichtaufbau, in dem eine zweite Öffnung mit Unterätzungen gebildet wurde.
- Fig. 4: zeigt den Schichtaufbau, auf den eine Kontaktschicht aufgebracht wurde.
- Fig. 5: zeigt den Schichtaufbau nach der Strukturierung der Kontaktschicht in Kontakte.
- Fig. 6: zeigt nach dem erfindungsgemäßen Verfahren hergestellte Vielschichtkondensatoren nach der Vereinzelung.

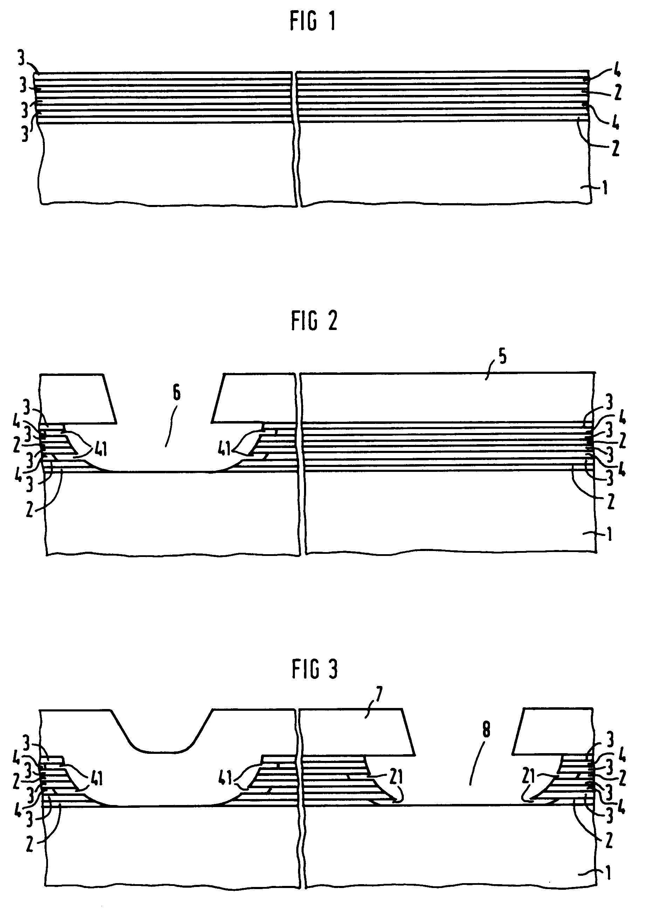

Auf ein Substrat 1, das z. B. nichtleitend ist, wird in einer Sputteranlage mehrfach eine Schichtenfolge abgeschieden, die jeweils eine leitfähige Schicht 2 aus einem ersten Material, eine dielektrische Schicht 3, eine leitfähige Schicht 4 aus einem zweiten Material und eine weitere dielektrische Schicht 3 umfaßt (s. Fig. 1). Die Schichtenfolge kann sich beliebig oft wiederholen. Das erste Material und das zweite Material werden so ausgewählt, daß sowohl das erste Material selektiv zu dem zweiten Material ätzbar ist als auch das zweite Material selektiv zu dem ersten Material ätzbar ist.

An der Oberfläche des Schichtaufbaus wird eine erste Maske 5 hergestellt (s. Fig. 2). Die erste Maske 5 wird z. B. aus Fotolack unter Verwendung optischer Lithographie hergestellt. In einem ersten Ätzschritt, in dem die erste Maske 5 als Ätzmaske verwendet wird, wird in dem Schichtaufbau eine erste Öffnung 6 erzeugt. Der erste Ätzschritt erfolgt z. B. durch naßchemisches Ätzen oder durch isotropes oder anisotropes Trockenätzen. In dem ersten Ätzschritt werden alle Schichten im wesentlichen mit annähernd gleicher Rate geätzt. Es ist vorteilhaft, wenn die Oberfläche des Substrats gegenüber dem ersten Ätzschritt resistent ist.

In einem zweiten Ätzschritt wird eine selektiv das zweite Material ätzende Ätze verwendet, um durch Ätzung der leitfähigen Schichten 4 aus dem zweiten Material Unterätzungen 41 zu erzeugen. Da der zweite Ätzschritt selektiv zum ersten Material und zu dem Material der dielektrischen Schichten 3 erfolgt, überragen die dielektrische Schichten 3 und die leitfähigen Schichten 2 aus dem ersten Material die Unterätzungen 41.

Nach Entfernen der ersten Maske 5 wird eine zweite Maske 7 aufgebracht, die z. B. durch optische Lithographie aus Fotolack gebildet wird (s. Fig. 3). Die zweite Maske 7 überdeckt die erste Öffnung 6 vollständig. In einem dritten Ätzschritt wird in dem Schichtaufbau eine zweite Öffnung 8 erzeugt. Dies erfolgt z. B. durch naßchemisches Ätzen oder durch isotropes oder anisotropes Trockenätzen, wobei der dritte Ätzschritt alle Schichten im wesentlichen mit annähernd gleicher Rate ätzt. Es ist zweckmäßig, wenn die Oberfläche des Substrats 1 im dritten Ätzschritt nicht angegriffen wird.

Unter Verwendung einer Ätze, die das erste Material selektiv zum zweiten Material und zum Material der dielektrischen Schichten 3 angreift, werden in einem vierten Ätzschritt Unterätzungen 21 durch Ätzen der leitfähigen Schichten aus dem ersten Material gebildet. Diese Unterätzungen 21 werden seitlich durch die dielektrischen Schichten 3 und die leitfähigen Schichten 4 aus dem zweiten Material überragt.

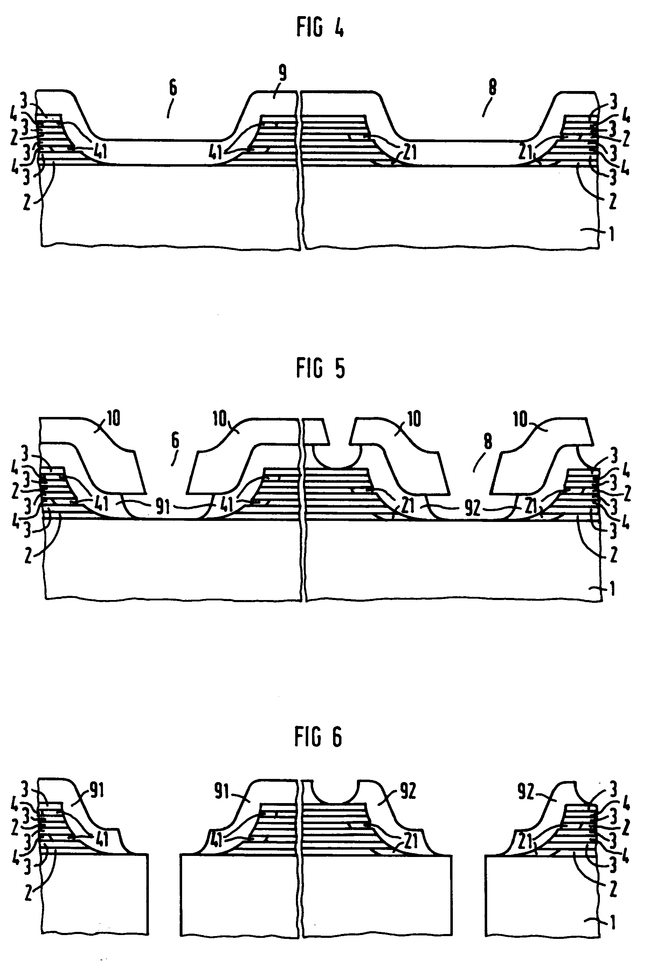

Nach Entfernen der zweiten Maske 7 wird ganzflächig eine Metallschicht 9 aufgebracht. Die Metallschicht 9 wird in einem gerichteten Abscheideverfahren, z. B. durch Sputtern oder Aufdampfen, abgeschieden. Im Bereich der ersten Öffnung 6 steht die Metallschicht 9 daher nur mit den leitfähigen Schichten 2 aus dem ersten Material in Verbindung, während sie von den leitfähigen Schichten 4 aus dem zweiten Material durch die Unterätzungen 41 getrennt ist. Im Bereich der zweiten Öffnung 8 steht die Metallschicht 9 mit den leitfähigen Schichten 4 aus dem zweiten Material in Verbindung, während sie von den leitfähigen Schichten 2 aus dem ersten Material durch die Unterätzungen 21 isoliert ist (s. Fig. 4).

Es wird eine dritte Maske 10 aufgebracht, die zur Strukturierung der Metallschicht 9 als Ätzmaske verwendet wird. Dabei entstehen erste Kontakte 91 und zweite Kontakte 92. Die ersten Kontakte 91, die mindestens entlang der Flanken der ersten Öffnung 6 angeordnet sind, kontaktieren jeweils die leitfähigen Schichten 2 aus dem ersten Material. Die zweiten Kontakte 92 sind mindestens entlang der Flanken der zweiten Öffnung 8 angeordnet und kontaktieren jeweils die leitfähigen Schichten 4 aus dem zweiten Material (s. Fig. 5).

Im Bereich des Bodens der ersten Öffnung 6 sowie der zweiten Öffnung 8 wird die Oberfläche des Substrats 1 dabei freigelegt. Diese freigeätzten Bereiche der Substratoberfläche können den Sägerahmen zum Vereinzeln diskreter Kondensatoren definieren (s. Fig. 6).

Bei der Strukturierung der Metallschicht 9 wird die Metallschicht 9 an der Oberfläche des Schichtaufbaus unterbrochen, so daß der erste Kontakt 91 und der zweite Kontakt 92 voneinander isoliert sind.

Gemäß einem ersten Ausführungsbeispiel werden die dielektrischen Schichten 3 aus Siliziumnitrid (Si₃N₄) hergestellt. Die leitfähigen Schichten 2 aus dem ersten Material werden aus Wolfram, die leitfähigen Schichten 4 aus dem zweiten Material werden aus Wolframsilizid hergestellt. Dabei wird vorzugsweise WSi₂ oder amorphes WSi_{0,4} verwendet. Der Schichtaufbau wird in einer Sputteranlage, die mindestens Targets aus Si, W und WSiₓ aufweist, erzeugt. Si₃N₄ wird dabei z. B. durch reaktives Absputtern des Siliziumtargets gebildet.

Zur Strukturierung der Schichten wird ein Trockenätzprozeß unter Verwendung des Ätzgases SF₆, das die nötigen F-haltigen Radikale liefert, eingesetzt. Die Selektivität im zweiten Ätzschritt wird durch Zugabe von O₂ im Prozentbereich, vorzugsweise 30 %, eingestellt. Die Ätzrate von WSiₓ erhöht sich durch Zugabe von O₂ in dieser Menge um etwa das Fünffache gegenüber reinem SF₆. Die Ätzrate von reinem Wolfram nimmt dagegen dadurch ab.

Im vierten Ätzschritt wird zur Einstellung der Selektivität dem SF₆ N₂ zugefügt. Durch Zugabe von N₂ in einer Menge von 60 % erhöht sich die Ätzrate für reines Wolfram um etwa das 6-fache.

Die Selektivität der Ätzung läßt sich außer durch Beimengung von O₂ und N₂ auch durch Beimengung von Ar, H₂ und He einstellen. Die Kombinationen der Gase sowie die Prozeßparameter sind dabei von der verwendeten Ätzanlage abhängig.

Gemäß einem zweiten Auführungsbeispiel werden die dielektrischen Schichten 3 aus Ta₂O₅ gebildet. Dadurch werden in dem fertigen Kondensator höhere Kapazitäten erzielt. Die leitfähigen Schichten 2 aus dem ersten Material werden z. B. aus reinem Tantal und die leitfähigen Schichten 4 aus dem zweiten Material aus TaN gebildet. Dieser Schichtaufbau wird z. B. durch Abscheiden in einer Sputteranlage mit einem einzigen Target aus reinem Tantal gebildet. TaN wird dabei durch Beimischung von N₂ zum Sputtergas Ar erzeugt, während Ta₂₅ durch Beimischung von O₂ zum Sputtergas Ar erzeugt wird. Zur Strukturierung des Schichtaufbaus wird hier ebenfalls reaktives Ionenätzen mit Ätzgasen auf der Basis der Fluorchemie eingesetzt. Als Ätzgase werden SF₆ oder CF₄ verwendet, wobei zur Einstellung der erforderlichen Selektivitäten O₂, N₂, H₂, Ar, He zugefügt werden.

Da der Schichtaufbau in dem erfindungsgemäßen Herstellverfahren in einem einzigen Schritt in einer Sputteranlage abgeschieden werden kann, ohne daß das Vakuum gebrochen werden muß, ist eine kostengünstige Prozeßführung möglich.

Da das Kondensatordielektrikum beidseitig mit niederohmigem Metall kontaktiert ist und die Metallschichten wiederum mit niederohmigem Metall wie z. B. Al oder verdünnten Al-Legierungen kontaktiert werden können, weist der fertige Vielschichtkondensator einen sehr kleinen Serienwiderstand auf. Dadurch ist der Vielschichtkondensator für Hochfrequenzanwendungen geeignet.
Bei Verwendung eines leitfähigen Substrats kann der eine Pol über die Rückseite des Schichtaufbaus kontaktiert werden.

## Patentansprüche

1. Verfahren zur Herstellung eines Vielschichtkondensators,
- bei dem auf ein Substrat (1) ein Schichtaufbau aufgebracht wird, der alternierend leitfähige Schichten (2, 4) und dielektrische Schichten (3) umfaßt und in dem aufeinanderfolgende leitfähige Schichten jeweils aus einem ersten Material (2) und einem davon verschiedenen zweiten Material (4) gebildet werden, die gegenseitig zueinander selektiv ätzbar sind,
- bei dem in einem ersten Ätzschritt unter Verwendung einer ersten Maske (5) als Ätzmaske eine erste Öffnung (6) in den Schichtaufbau (2, 3, 4) geätzt wird,
- bei dem in einem zweiten Ätzschritt, der das zweite Material selektiv zum ersten Material entfernt, die leitfähigen Schichten (4) aus dem zweiten Material geätzt werden, so daß im Schichtaufbau (2, 3, 4) der ersten Öffnung (6) benachbart Unterätzungen (41) entstehen,
- bei dem in einem dritten Ätzschritt unter Verwendung einer zweiten Maske (7) als Ätzmaske eine zweite Öffnung (8) in den Schichtaufbau (2, 3, 4) geätzt wird,
- bei dem in einem vierten Ätzschritt, der das erste Material selektiv zum zweiten Material entfernt, die leitfähigen Schichten (2) aus dem ersten Material geätzt werden, so daß im Schichtaufbau (2, 3, 4) der zweiten Öffnung (8) benachbart Unterätzungen (21) entstehen,
- bei dem in der ersten Öffnung (6) ein erster Kontakt (91) gebildet wird, der wegen der Unterätzungen (41) nur mit den leitfähigen Schichten (2) aus dem ersten Material in Verbindung steht, und bei dem in der zweiten Öffnung (8) ein zweiter Kontakt (92) gebildet wird, der wegen der Unterätzungen (21) nur mit den leitfähigen Schichten (4) aus dem zweiten Material in Verbindung steht.

2. Verfahren nach Anspruch 1,
bei dem der zweite Ätzschritt und der vierte Ätzschritt zur Bildung der Unterätzungen (21, 41) selektiv zu den dielektrischen Schichten (3) erfolgt.

3. Verfahren nach Anspruch 1 oder 2,
bei dem die leitfähigen Schichten (2, 4) aus verschiedenen Metallen gebildet werden.

4. Verfahren nach einem der Ansprüche 1 bis 3,
bei dem der erste Kontakt (91) und der zweite Kontakt (92) durch ganzflächiges, gerichtetes Aufbringen und Strukturieren einer Kontaktschicht (9) gebildet werden.

5. Verfahren nach Anspruch 4,
bei dem die Kontaktschicht (9) durch Aufsputtern oder Aufdampfen aufgebracht wird.

6. Verfahren nach einem der Ansprüche 1 bis 5,
bei dem die erste Maske (5) und die zweite Maske (7) durch optische Lithographie oder durch Siebdruck gebildet werden.

7. Verfahren nach einem der Ansprüche 1 bis 6,
bei dem die leitfähigen Schichten (2, 4) und die dielektrischen Schichten (3) durch Sputtern aufgebracht werden.

8. Verfahren nach einem der Ansprüche 1 bis 7,
bei dem die dielektrischen Schichten (3) aus Si₃N₄, die leitfähigen Schichten (2) aus dem ersten Material aus Wolfram und die leitfähigen Schichten (4) aus dem zweiten Material aus Wolframsilizid gebildet werden.

9. Verfahren nach Anspruch 8,
bei dem die leitfähigen Schichten (4) aus dem zweiten Material aus WSi₂ oder WSi_{0,4} gebildet werden.

10. Verfahren nach einem der Ansprüche 1 bis 7,
bei dem die dielektrischen Schichten (3) aus Ta₂O₅, die leitfähigen Schichten (2) aus dem ersten Material aus Ta und die leitfähigen Schichten (4) aus dem zweiten Material aus TaN gebildet werden.

11. Verfahren nach einem der Ansprüche 8 bis 10,
- bei dem als erster Ätzschritt zur Bildung der ersten Öffnung (6) und als dritter Ätzschritt zur Bildung der zweiten Öffnung (8) ein Trockenätzprozeß mit fluorhaltigem Gas als Ätzgas verwendet wird,
- bei dem zur Einstellung der Selektivität im zweiten Ätzschritt und im vierten Ätzschritt dem Ätzgas jeweils mindestens eines der Gases O₂, Ar, N₂, H₂, He beigemengt wird.

12. Verfahren nach Anspruch 11,
bei dem als Ätzgas SF₆ oder CF₄ verwendet wird.

13. Verfahren nach Anspruch 11 oder 12 in Verbindung mit Anspruch 8 oder 9,
- bei dem im zweiten Ätzschritt zur Ätzung von Wolframsilizid O₂ in einer Menge zwischen 10 % und 50 % zugegeben wird,
- bei dem im vierten Ätzschritt zur Ätzung von Wolfram N₂ in einer Menge zwischen 30 % und 70 % zugegeben wird.
